# EUROPEAN PATENT SPECIFICATION

(11) **EP 0 951 213 B1**
(45) Date of publication and mention of the grant of the patent: **12.11.2003**
(21) Application number: 98939007.5
(22) Date of filing: 03.08.1998
(51) Int. Cl.: A01K 5/00, A01K 5/02

(54) **AN IMPLEMENT FOR MIXING FODDER**
FUTTERMISCHANLAGE
APPAREIL MELANGEUR DE FOURRAGE

(30) Priority: 07.08.1997 NL 1006734
(43) Date of publication of application: 27.10.1999
(60) Divisional application: 03077130.7
(73) Proprietor: MAASLAND N.V., 3155 PD Maasland (NL)
(72) Inventor: VAN DEN BERG, Karel, NL-2971 BR Bleskensgraaf (NL)
(74) Representative: Corten, Maurice Jean F.M.
(86) International application number: PCT/NL98/00448
(87) International publication number: WO 99/007215

(56) References cited:
- CH-A- 677 171
- FR-A- 2 704 779
- GB-A- 2 155 297
- NL-A- 8 202 293

## Description

The invention relates to an implement for mixing fodder.

Such implements are known and usually consist of a hopper which may be either stationary or transportable and in which two sorts of fodder can be mixed. Subsequently the mixed fodder can be conveyed to the place where it is consumed by the animals, such as cows.

These known implements have various disadvantages. One thereof is that the farmer has to perform two operations, i.e. first introducing the sorts of fodder into the mixing implement and subsequently bringing the mixed fodder from the mixing implement into the feed channel. Furthermore, it may sometimes be considered as a disadvantage that the known implement cannot be used properly for mixing not yet consumed fodder present in a feed channel with new fodder.

The objective of the invention is to provide an implement by means of which the fodder can be mixed in the stable or cowshed itself.

According to the invention the implement comprises mechanically driven mixing devices for mixing the fodder in a feed channel, which implement has a sensor for determining the position of the mixing device relative to the feed channel. By means of this construction it is possible to determine the position of the mixing device either from the driver's seat of a tractor, or elsewhere.

The invention will be explained in further detail with reference to a number of exemplary embodiments.
Figure 1 is a plan view of the cowshed in which there is provided a mixing implement according to the invention;
Figure 2 is a cross-section of a cowshed of Figure 1, offering a rear view of the mixing implement present therein according to a second embodiment;
Figure 3 is a plan view of another embodiment in which mixing devices of the mixing implement rotate about upwardly directed axes;
Figure 4 is a plan view of another embodiment of the mixing devices of the mixing implement, which mixing devices each rotate about a horizontal axis;
Figure 5 is a plan view of an embodiment in which a mixing implement is suitable for mixing solid and liquid fodder;
Figure 6 is a plan view of a mixing implement, a hopper for different sorts of fodder and with a mixing device arranged behind the hopper.

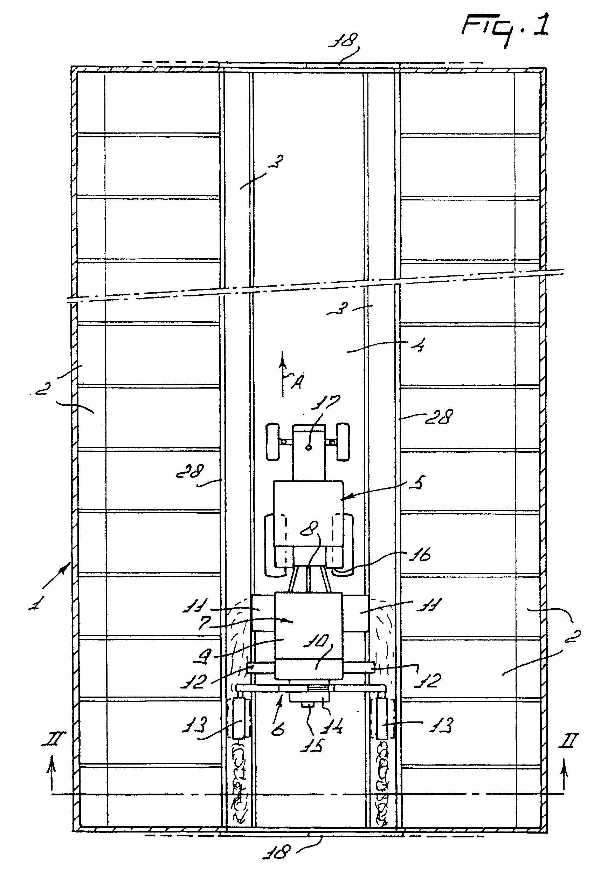

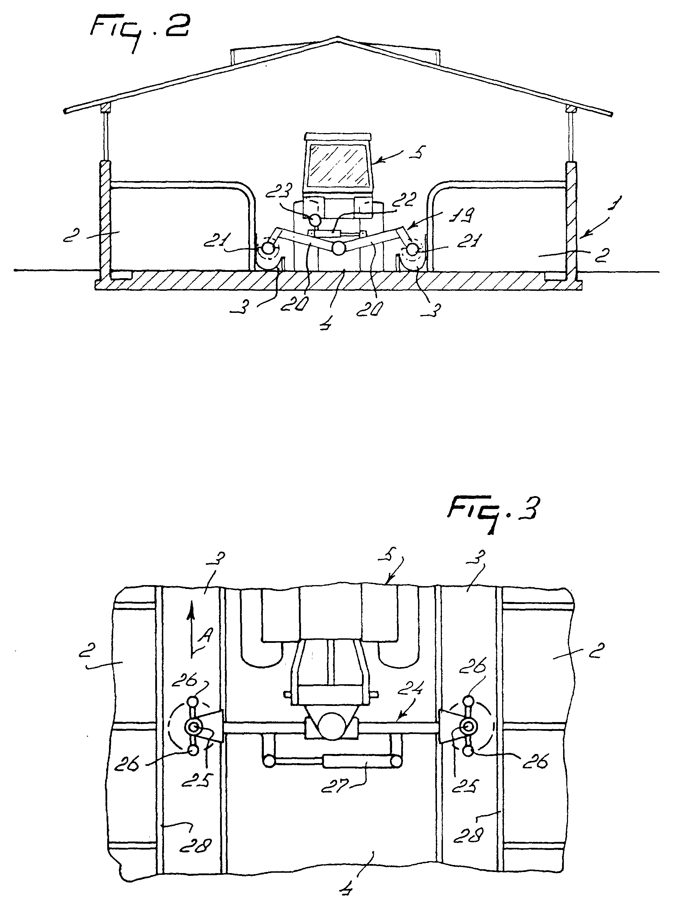

The cowshed 1 according to Figures 1 and 2 comprises two rows of boxes 2, e.g. for cows. Along each row of boxes there is provided a feed channel 3 in which fodder is deposited, so that the cows can take fodder from the feed channel. Between the feed channels 3 there is provided a strip or centre alley 4.

This strip or centre alley 4 is normally used as a walking path, e.g. for filling the feed channels, whether or not by means of a tractor.

In Figure 1 a tractor 5 with a mixing implement 6 according to the invention is arranged on the strip 4 in the cowshed.

The mixing implement 6 comprises a hopper 7 which is capable of being coupled to a lifting hitch of the tractor 5 by means of a three-point coupling 8. The hopper 7 comprises two spaces, i.e. a space 9 for coarse fodder, such as hay, and a space 10 for other fodder, such as concentrate.

The space 9 has on both sides a discharge device 11, e.g. a discharge belt, by means of which the fodder can be supplied from the space 9 to the feed channels 3. In the same manner, the space 10 at the left and right side comprises a discharge device 12 by means of which the fodder is supplied from the space 10 to the feed channels 3. The mixing implement 6 further comprises two mixing devices 13 by means of which the fodder supplied to the feed channels 3 is mixed. These mixing devices are driven by means of a non-shown power take-off shaft disposed at the rear side of the hopper 7 via a transmission 14 and each rotate about an axis 15 extending transversely to the direction of travel A. The power take-off shaft is driven - in a manner known per se - behind the hopper 7 via the power take-off shaft of the tractor.

The drive may have means for altering the number of revolutions of the mixing devices. Additionally there may be provided means for stopping one of the mixing devices independently of the other. The implement may also have means for lifting the mixing devices from the feed channel and placing them into a transport position in which the total width of the devices comes within the permitted transport width of 3 metres.

Preferably the mixing devices are provided with a non-shown sensor so that the tractor driver can check from the tractor whether the mixing devices are correctly positioned.

In this embodiment the mixing implement is arranged at the rear side 16 of a tractor. However, it may also be desirable to dispose the mixing implement at the front side of the tractor when the tractor has a power take-off shaft and a lifting hitch at its front side.

The tractor may be provided with an aerial 17 for radiographically opening and closing of the doors 18 of the cowshed.

Figure 2 shows the rear side of a mixing implement 19 according to the invention. The implement comprises two sidewardly projecting arms 20 to each of which there is fitted a mixing device 21 which rotates about an axis extending horizontally in the direction of travel A of the implement. This mixing device 21 may be provided with a number of non-shown outwardly projecting tines. The mixing device is disposed in the feed channel with some clearance relative to the side walls thereof.

The side walls and the bottom of the feed channel may be rounded off. The sideward adjustment of the devices may take place by means of a hydraulic cylinder 22 which is provided with an accumulator 23 for track correction. The adjustment may be operated from the tractor 5.

The drive of the mixing devices is effected via a transmission from the power take-off shaft of the tractor.

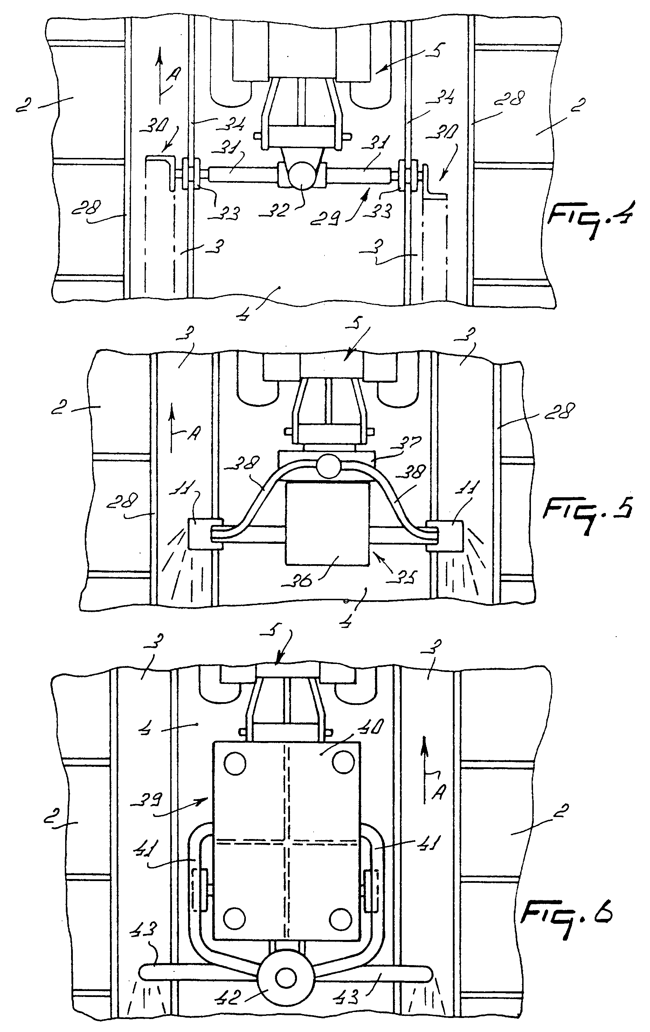

In the embodiment of Figure 3 the mixing implement 24 is coupled directly to the lifting hitch of the tractor 5, although the mixing device may also be fastened optionally to the hopper, e.g. the hopper 7.

In this situation the mixing implement 24 has mixing devices 26 rotating about upwardly directed axes 25, which mixing devices 26 are provided with non-shown downwardly projecting tines.

The mixing devices 26 are driven about the upwardly directed axis via a transmission. Preferably the mixing devices 26 rotate in opposite directions relative to each other. In this embodiment, for example, the farmer can supply by hand the new coarse fodder to the feed channel and the mixing implement can mix the new fodder with fodder still present in the feed channel.

The mixing implement 24 is provided with means 27 for changing the distance between the mixing devices. It is noticed that it is desirable that the wall 28 of the feed channel located at the side of the boxes 2 is designed as a higher one than the wall situated at the side of the strip 4.

The mixing implement 29 shown in Figure 4 corresponds on a number of points to the mixing implement shown of Figure 3 and corresponding parts are therefore indicated by the same reference numerals.

The mixing implement 29 comprises mixing devices 30 which rotate about a horizontal axis 31, preferably in such a direction that the lower side of the mixing device moves in the direction of travel A of the tractor 5. The mixing devices 30 are coupled with the lifting hitch of the tractor 5 via a transmission 32. To this transmission 32 there are fitted support wheels 33 bearing on rails 34 on the inside of the feed channels. In this embodiment the support wheels 33 are capable of rotating freely, but optionally they could be driven as well in a modified construction.

In the embodiment of Figure 5 liquid and solid fodder can be mixed.

Figure 5 shows a mixing implement 35 provided with a hopper 36 for solid fodder and a tank 37 for liquid fodder, e.g. containing minerals.

As described with reference to Figure 1, the hopper 36 has discharge devices 11, while the tank 37 has discharge lines 38 debouching into the discharge devices 11. In this manner the liquid fodder can be mixed with the solid fodder. Mixing devices as described in the foregoing may optionally be disposed at the end of the discharge device.

The embodiment of Figure 6 shows a mixing implement 39 provided with a hopper 40 for different sorts of fodder. Via lines 41 the fodder can be supplied to a mixing device 42 disposed at the rear side of the hopper 40.

From the mixing device 42 there are provided discharge lines 43 for supplying the mixed fodder from the mixing device 42 to the feed channels 3.

In the discharge lines 43 non-shown transport means, e.g. a rotating displacing screw, may be provided for displacing the fodder in the line in the direction of the feed channel.

The invention is not restricted to the embodiments shown and elements of one embodiment may optionally be applied in another embodiment.

## Claims

1. An implement for mixing fodder, **characterized in that** the implement (6, 19, 24, 29, 35, 39) comprises mechanically driven mixing devices (13, 21, 26, 30, 42) for mixing the fodder in a feed channel (3), which implement (6, 19, 24, 29, 35, 39) has a sensor for determining the position of the mixing device (13, 21, 26, 30, 42) relative to the feed channel (3).

2. An implement as claimed in claim 1, **characterized in that** the mixing device (13, 21, 26, 30, 42) is driven from a tractor (5) or a similar vehicle propelling the implement.

3. An implement as claimed in any one of the preceding claims, **characterized in that** the implement is provided with means for controlling the mixing speed of the mixing devices (13, 21, 26, 30, 42).

4. An implement as claimed in any one of the preceding claims, **characterized in that** the implement (6, 19, 24, 29, 35, 39) comprises two mixing devices (13, 21, 26, 30, 42) which, seen in the direction of travel, are located on both sides of the implement.

5. An implement as claimed in claim 4, **characterized in that** the distance between the mixing devices (13, 21, 26, 30, 42) is adjustable.

6. An implement as claimed in claim 2 and 5, **characterized in that** the adjustment of the distance can be effected from the tractor (5).

7. An implement as claimed in any one of the preceding claims 4 to 6, **characterized in that** the distance of the mixing devices (13, 21, 26, 30, 42) can be adjusted at a measure corresponding to the distance of two feed channels (3) between which the implement can move, in such a manner that the fodder can optionally be mixed simultaneously in the two channels (3).

8. An implement as claimed in any one of the preceding claims, **characterized in that** the mixing device (26) is driven about an upwardly directed axis (25).

9. An implement as claimed in any one of claims 1 to 8, **characterized in that** the mixing device (30) is driven about a substantially horizontally extending axis (31).

10. An implement as claimed in claim 9, **characterized in that** the mixing device (13) is driven about an axis (15) extending at least substantially in the direction of travel of the implement.

11. An implement as claimed in claim 9, **characterized in that** the mixing device (13) is driven about an axis (15) extending transversely to the direction of travel of the implement.

12. An implement as claimed in claim 11, **characterized in that** the mixing device (30) has a guide element, e.g. a wheel (33), which is capable of rolling over a support extending in the direction of travel, such as a rail (34), and which serves as a support for the mixing device (30).

13. An implement as claimed in any one of the preceding claims, **characterized in that** the implement is provided with a three-point trestle by means of which the implement can be coupled to a tractor (5).

14. An implement as claimed in any one of the preceding claims, **characterized in that** the implement comprises at least one hopper (7, 36, 40) for fodder.

15. An implement as claimed in claim 14, **characterized in that** the hopper (7, 36, 40)) has at least one outlet for supplying the fodder to a feed channel (3).

16. An implement as claimed in claim 15, **characterized in that** the outlet, seen in the direction of travel of the implement, is located in front of the mixing device.

17. An implement as claimed in claim 15 or 16, **characterized in that** the hopper (7, 36, 40) comprises at least two compartments and each compartment has at least one outlet, while, seen in the direction of travel of the implement, the outlet of one compartment is located in front of the outlet of the other compartment.

18. An implement as claimed in any one of the preceding claims, **characterized in that** the implement comprises a mixing device and said mixing device is supplied with fodder from at least two hoppers (7, 36, 40), which fodder is supplied from the mixing device to at least one feed channel (3).

19. An implement as claimed in any one of the preceding claims, **characterized in that** the implement is provided with radiographic means which are capable of cooperating with radiographic means of a building in which the fodder has to be deposited, in such a manner that the doors of the building can be automatically opened and/or closed by the implement.

## Patentansprüche

1. Vorrichtung zum Mischen von Futter,
**dadurch gekennzeichnet, daß** die Vorrichtung (6, 19, 24, 29, 35, 39) mechanisch angetriebene Mischvorrichtungen (13, 21, 26, 30, 42) zum Mischen des Futters in einer Futterrinne (3) umfaßt, wobei die Vorrichtung (6, 19, 24, 29, 35, 39) einen Sensor zum Ermitteln der Position der Mischvorrichtung (13, 21, 26, 30, 42) relativ zu der Futterrinne (3) aufweist.

2. Vorrichtung nach Anspruch 1,
**dadurch gekennzeichnet, daß** die Mischvorrichtung (13, 21, 26, 30, 42) von einem Schlepper (5) oder einem ähnlichen, die Vorrichtung antreibenden Fahrzeug angetrieben wird.

3. Vorrichtung nach einem der vorhergehenden Ansprüche,
**dadurch gekennzeichnet, daß** die Vorrichtung mit Mitteln zum Steuern der Mischgeschwindigkeit der Mischvorrichtungen (13, 21, 26, 30, 42) versehen ist.

4. Vorrichtung nach einem der vorhergehenden Ansprüche,
**dadurch gekennzeichnet, daß** die Vorrichtung (6, 19, 24, 29, 35, 39) zwei Mischvorrichtungen (13, 21, 26, 30, 42) umfaßt, die in Arbeitsrichtung betrachtet beiderseits der Vorrichtung angeordnet sind.

5. Vorrichtung nach Anspruch 4,
**dadurch gekennzeichnet, daß** der Abstand zwischen den Mischvorrichtungen (13, 21, 26, 30, 42) einstellbar ist.

6. Vorrichtung nach Anspruch 2 und 5,
**dadurch gekennzeichnet, daß** die Einstellung des Abstandes vom Schlepper (5) aus durchgeführt werden kann.

7. Vorrichtung nach einem der vorhergehenden Ansprüche 4 bis 6,
**dadurch gekennzeichnet, daß** der Abstand der Mischvorrichtungen (13, 21, 26, 30, 42) auf einen Wert eingestellt werden kann, der dem Abstand zwischen zwei Futterrinnen (3) entspricht, zwischen denen sich die Vorrichtung bewegen kann, so daß das Futter wahlweise gleichzeitig in den beiden Rinnen (3) gemischt werden kann.

8. Vorrichtung nach einem der vorhergehenden Ansprüche,
**dadurch gekennzeichnet, daß** die Mischvorrichtung (26) um eine aufwärts gerichtete Achse (25) angetrieben wird.

9. Vorrichtung nach einem der Ansprüche 1 bis 8,
**dadurch gekennzeichnet, daß** die Mischvorrichtung (30) um eine im wesentlichen horizontal ausgerichtete Achse (31) angetrieben wird.

10. Vorrichtung nach Anspruch 9,
**dadurch gekennzeichnet, daß** die Mischvorrichtung (13) um eine Achse (15) angetrieben wird, die sich zumindest im wesentlichen in Arbeitsrichtung der Vorrichtung erstreckt.

11. Vorrichtung nach Anspruch 9,
**dadurch gekennzeichnet, daß** die Mischvorrichtung (13) um eine Achse (15) angetrieben wird, die sich quer zur Arbeitsrichtung der Vorrichtung erstreckt.

12. Vorrichtung nach Anspruch 11,
**dadurch gekennzeichnet, daß** die Mischvorrichtung (30) ein Führungselement, wie z. B. ein Rad (33), aufweist, das über eine sich in Arbeitsrichtung erstreckende Abstützung, wie z. B. eine Schiene (34), rollen kann und als Stütze für die Mischvorrichtung (30) dient.

13. Vorrichtung nach einem der vorhergehenden Ansprüche,
**dadurch gekennzeichnet, daß** die Vorrichtung mit einem Dreipunkt-Anbaubock versehen ist, mittels dessen die Vorrichtung an einen Schlepper (5) angeschlossen werden kann.

14. Vorrichtung nach einem der vorhergehenden Ansprüche,
**dadurch gekennzeichnet, daß** die Vorrichtung mindestens einen Vorratsbehälter (7, 36, 40) für Futter umfaßt.

15. Vorrichtung nach Anspruch 14,
**dadurch gekennzeichnet, daß** der Vorratsbehälter (7, 36, 40) mindestens einen Auslaß zum Zuführen des Futters zu einer Futterrinne (3) aufweist.

16. Vorrichtung nach Anspruch 15,
**dadurch gekennzeichnet, daß** der Auslaß in Arbeitsrichtung der Vorrichtung betrachtet vor der Mischvorrichtung angeordnet ist.

17. Vorrichtung nach Anspruch 15 oder 16,
**dadurch gekennzeichnet, daß** der Vorratsbehälter (7, 36, 40) mindestens zwei Kammern umfaßt und jede Kammer mindestens einen Auslaß hat, wobei in Arbeitsrichtung der Vorrichtung betrachtet der Auslaß der einen Kammer vor dem Auslaß der anderen Kammer angeordnet ist.

18. Vorrichtung nach einem der vorhergehenden Ansprüche,
**dadurch gekennzeichnet, daß** die Vorrichtung eine Mischvorrichtung umfaßt und die Mischvorrichtung aus mindestens zwei Vorratsbehältern (7, 36, 40) mit Futter versorgt wird, wobei das Futter von der Mischvorrichtung in mindestens eine Futterrinne (3) eingeleitet wird.

19. Vorrichtung nach einem der vorhergehenden Ansprüche,
**dadurch gekennzeichnet, daß** die Vorrichtung mit Funkeinrichtungen versehen ist, die mit Funkeinrichtungen eines Gebäudes, in dem das Futter abzulegen ist, in der Weise zusammenwirken können, daß die Türen des Gebäudes von der Vorrichtung automatisch geöffnet und/oder geschlossen werden können.

## Revendications

1. Machine à mélanger du fourrage, caractérisée en se que la machine (6, 19, 24, 29, 35, 39) comprend des appareils mélangeurs entraînés mécaniquement (13, 21, 26, 30, 42) pour mélanger le fourrage dans un canal d'amenée (3), laquelle machine (6, 19, 24, 29, 35, 39) comporte un capteur pour déterminer la position de l'appareil mélangeur (13, 21, 26, 30, 42) par rapport au canal d'amenée (3).

2. Machine selon la revendication 1, **caractérisée en ce que** l'appareil mélangeur (13, 21, 26, 30, 42) est entrainé à partir d'un tracteur (5) ou un véhicule similaire propulsant la machine.

3. Machine selon l'une quelconque des revendications précédentes, **caractérisée en ce que** la machine est pourvue de moyens destinés à contrôler la vitesse de mélange des appareils mélangeurs (13, 21, 26, 30, 42).

4. Machine selon l'une quelconque des revendications précédentes, **caractérisée en ce que** la machine (6, 19, 24, 29, 35, 39) comprend deux appareils mélangeurs (13, 21, 26, 30, 42) qui, vus dans le sens du déplacement, sont placés sur les côtés de la machine.

5. Machine selon la revendication 4, **caractérisée en ce que** la distance entre les appareils mélangeurs (13, 21, 26, 30, 42) est réglable.

6. Machine selon les revendications 2 et 5, **caractérisée en ce que** le réglage de la distance peut être effectué à partir du tracteur (5).

7. Machine selon l'une quelconque des revendications précédentes 4 à 6, **caractérisé en ce que** la distance des appareils mélangeurs (13, 21, 26, 30, 42) peut être réglée à une mesure correspondant à la distance de deux canaux d'amenée (3) entre lesquels la machine peut se déplacer, de telle manière que le fourrage puisse optionnellement être mélangé simultanément dans les deux canaux (3).

8. Machine selon l'une quelconque des revendications précédentes, **caractérisée en ce que** l'appareil mélangeur (26) est entraîné autour d'un axe dirigé vers le haut (25).

9. Machine selon l'une quelconque des revendications précédentes 1 à 8, **caractérisée en ce que** l'appareil mélangeur (30) est entraîné autour d'un axe s'étendant sensiblement horizontalement (31).

10. Machine selon la revendication 9, **caractérisée en ce que** l'appareil mélangeur (13) est entraîné autour d'un axe (15) s'étendant au moins sensiblement dans le sens du déplacement de la machine.

11. Machine selon la revendication 9, **caractérisée en ce que** l'appareil mélangeur (13) est entraîné autour d'un axe (15) s'étendant transversalement dans le sens de déplacement de la machine.

12. Machine selon la revendication 11, **caractérisée en ce que** l'appareil mélangeur (30) comporte un élément de guidage, par exemple une roue (33), qui peut rouler sur un support s'étendant dans le sens de déplacement, tel un rail (34), et qui sert de support à l'appareil mélangeur (30).

13. Machine selon l'une quelconque des revendications précédentes, **caractérisée en ce que** la machine est pourvue d'un trépied à trois points au moyen duquel la machine peut être couplée à un tracteur (5).

14. Machine selon l'une quelconque des revendications précédentes, **caractérisée en ce que** la machine comprend au moins une trémie (7, 36, 40) pour fourrage.

15. Machine selon la revendication 14, **caractérisée en ce que** la trémie (7, 36, 40) comporte au moins une sortie pour amener le fourrage à un canal d'amenée (3).

16. Machine selon la revendication 15, **caractérisée en ce que** la sortie, vue dans le sens du déplacement de la machine, est placée devant l'appareil mélangeur.

17. Machine selon la revendication 15 ou 16, **caractérisée en ce que** la trémie (7, 36, 40) comprend au moins deux compartiments et chaque compartiment comporte au moins une sortie, alors que vue dans le sens du déplacement de la machine, la sortie d'un compartiment est placée devant la sortie de l'autre compartiment.

18. Machine selon l'une quelconque des revendications précédentes, **caractérisée en ce que** la machine comprend un appareil mélangeur et ledit appareil mélangeur est alimenté en fourrage à partir d'au moins deux trémies (7, 36, 40), lequel fourrage est amené à partir de l'appareil mélangeur à au moins un canal d'amenée (3).

19. Machine selon l'une quelconque des revendications précédentes, **caractérisée en ce que** la machine est pourvue de moyens radiographiques qui peuvent coopérer avec des moyens radiographiques d'un bâtiment dans lequel le fourrage doit être déposé, de telle manière que les portes du bâtiment puissent être automatiquement ouvertes et/ou fermées par la machine.
